# DEMANDE DE BREVET EUROPEEN

(11) **EP 1 626 180 A1**
(43) Date de publication de la demande: **15.02.2006**
(21) Numéro de dépôt: 05015281.8
(22) Date de dépôt: 14.07.2005
(51) Int. Cl.: F15B 1/26, F16N 21/06

(54) **Dispositif de mise a l'air libre d'un reservoir de liquide**

(30) Priorité: 09.08.2004 FR 0408782
(71) Demandeur: ROBERT BOSCH GMBH, 70442 Stuttgart (DE)
(72) Inventeur: Fourcade, Jean, 77420 Champs sur Marne (FR); Attard, Jean-Marc, 60340 Villers sous St Leu (FR)
(74) Mandataire: Hurwic, Aleksander Wiktor

(57) **Abrégé**

L'invention concerne un Dispositif comportant un trou (22) de mise à l'air ambiant de l'intérieur (10) du réservoir (1). Un dispositif d'obturation (4) associé audit trou (22) à l'intérieur du réservoir contient un obturateur (5) de forme sensiblement sphérique et de densité inférieure à celle du liquide de freinage. Cet obturateur est capable de se plaquer contre ledit trou (22) sous la poussée du liquide de frein.

Application : Réservoir de liquide de frein pour véhicule automobile.

## Description

L'invention concerne un dispositif de mise à l'air libre d'un réservoir de liquide de frein applicable notamment à un réservoir de liquide de frein de véhicule automobile ou de motocycle.

Un système de freinage d'un véhicule automobile comporte usuellement un réservoir de liquide de frein permettant d'alimenter en liquide de frein le circuit de freinage du véhicule. Ce réservoir est généralement monté sur le maître cylindre du circuit de freinage auquel il est raccordé.

Le réservoir possède un orifice de remplissage permettant de le remplir en liquide. Cet orifice est obturé normalement par un bouchon vissé sur l'orifice de remplissage.

Un trou de mise à l'air ambiant est souvent prévu dans ce bouchon ou dans la partie supérieure du réservoir. pour permettre à l'air de pénétrer dans le réservoir au fur et à mesure que la quantité de liquide diminue dans le réservoir pour alimenter le circuit de freinage en liquide de freinage. Cela permet d'éviter que le vide ou une diminution de pression se fasse dans la partie non remplie du réservoir empêchant au liquide du réservoir d'alimenter le circuit de freinage.

Cependant, dans certains cas, le liquide contenu dans le réservoir peut atteindre le trou d'aération du bouchon et le liquide peut dans ce cas sortir du réservoir. Cela peut se produire, par exemple, au cours de phase d'accélérations ou de décélérations brutales, où dans des cas d'utilisation exceptionnelles telles que des utilisation sportives où le véhicule est dans une situation inclinée inhabituelle, les parcours sur des pentes abruptes, etc.

De façon normale on doit éviter que le liquide s'échappe du réservoir pour conserver au véhicule ses possibilités de freinage. Par ailleurs, le liquide de freinage est souvent un liquide corrosif. La sortie du liquide peut donc occasionner des dégradations dans ou autour du véhicule. Pour ces raisons, on doit éviter que le liquide de freinage s'échappe du réservoir de liquide de frein.

C'est pourquoi l'invention concerne un dispositif de mise à l'air libre d'un réservoir de liquide de frein comportant des moyens permettant à l'air de pénétrer dans le réservoir tout en interdisant au liquide de sortir du réservoir en cas d'inclinaison forte ou en cas d'accélérations ou de décélérations brutales.

L'invention concerne donc un dispositif de mise à l'air libre d'un réservoir de liquide de frein, comportant un trou de mise à l'air ambiant de l'intérieur du réservoir. Il est prévu un dispositif d'obturation associé audit trou à l'intérieur du réservoir et contenant un obturateur de forme sensiblement sphérique, de densité inférieure à celle du liquide de freinage, et capable de se plaquer contre ledit trou sous la poussée du liquide de frein.

Selon un mode de réalisation de l'invention le dispositif d'obturation comporte une cage ajourée contenant ledit obturateur et fixé autour dudit trou.

Avantageusement, le bouchon comporte un bossage situé à l'intérieur du réservoir autour du trou et la cage est fixée autour dudit bossage. Par exemple, la cage est en emboîtée ou vissée sur ledit bossage.

Selon une forme de réalisation de l'invention, le trou est fraisé à l'intérieur du réservoir de façon à présenter une surface tronconique sur laquelle l'obturateur est susceptible de se plaquer.

Selon une variante de réalisation, la surface tronconique comporte des rainures disposées selon des génératrices de la surface tronconique.

Selon une autre variante de réalisation, l'obturateur comporte des irrégularités en forme de creux et/ou de bosses.

Avantageusement, la cage a la forme générale d'un cylindre. La partie périphérique du cylindre comporte des ouvertures. Une première base du cylindre comporte une ouverture destinée à être emboîtée sur ledit bossage. Une deuxième base du cylindre est suffisamment fermée pour maintenir l'obturateur dans la cage.

Avantageusement, le réservoir comporte une partie inférieure destinée à contenir le liquide de frein et une partie supérieure qui se fixe de manière étanche sur la partie inférieure et qui comporte un trou auquel est associé ledit dispositif d'obturation.

L'invention est également applicable à un bouchon de réservoir de liquide de frein comprenant un trou d'aération et un dispositif d'obturation ainsi décrit associé à ce trou d'aération.

Les différents aspects et caractéristiques de l'invention apparaîtront plus clairement dans la description qui va suivre et dans les figures annexées qui représentent :
- les figures 1 et 2, un exemple de réalisation d'un réservoir équipé d'un bouchon selon l'invention,
- les figures 3 et 4, des exemples de fonctionnement du bouchon selon l'invention,
- les figures 5a et 5b, des exemples de billes d'obturation selon l'invention,
- la figure 6, un exemple de réalisation de du trou d'aération du bouchon selon l'invention,
- les figures 7a et 7b, des variantes de réalisation de l'invention dans lesquelles le dispositif selon l'invention est associé à un trou d'aération prévu à la partie supérieure du réservoir.

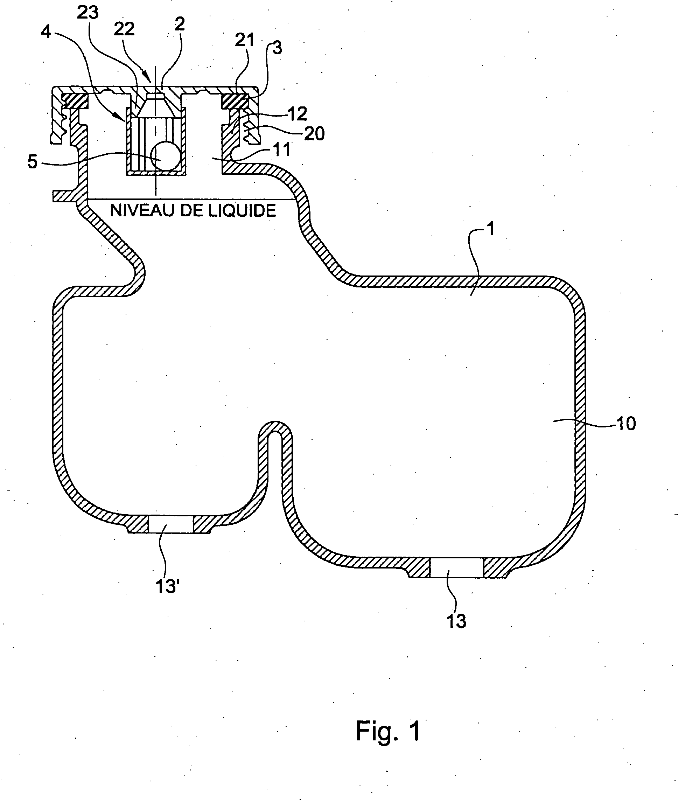

En se reportant à la figure 1, on va donc tout d'abord décrire un exemple de réalisation d'un réservoir équipé d'un bouchon selon l'invention.

Le réservoir 1 comporte une enceinte de réserve 10 avec, à la partie inférieure, des orifices de communication 13, 13' vers le maître cylindre du circuit de freinage du véhicule. A la partie supérieure du réservoir se trouve un orifice de remplissage 11 qui est fermé par un bouchon 2. Le bouchon 2 est généralement vissé sur la paroi extérieure 12 de l'orifice de remplissage 11. Un joint 3 peut être prévu entre le bouchon 2 et la partie supérieure de la paroi 12 de l'orifice de remplissage, ce qui interdit au liquide de freinage de sortir du réservoir.

Le bouchon 2 est muni à sa partie supérieure d'un trou 22 de mise à l'air libre de l'enceinte du réservoir ou trou d'aération. Une enceinte en forme de cage 4 est fixée à l'intérieur du bouchon autour du trou d'aération 22. Cette cage 4 contient un dispositif d'obturation 5 de forme générale sphérique.

La cage 4 comporte des ouvertures de façon que si le niveau de liquide de freinage atteint le niveau de la cage, le liquide puisse entrer dans la cage.

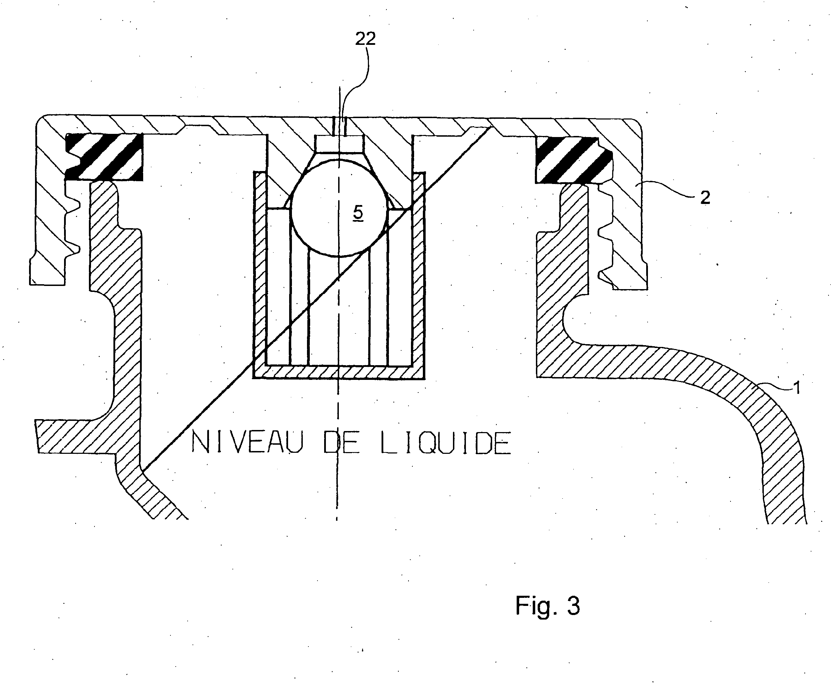

Le dispositif d'obturation à une densité inférieure à celle du liquide de freinage de telle sorte que si le liquide entre dans la cage, le dispositif d'obturation puisse flotter sur le liquide. Ainsi, comme cela est représenté en figure 3, le niveau de liquide peut plaquer le dispositif d'obturation contre le trou d'aération 22.

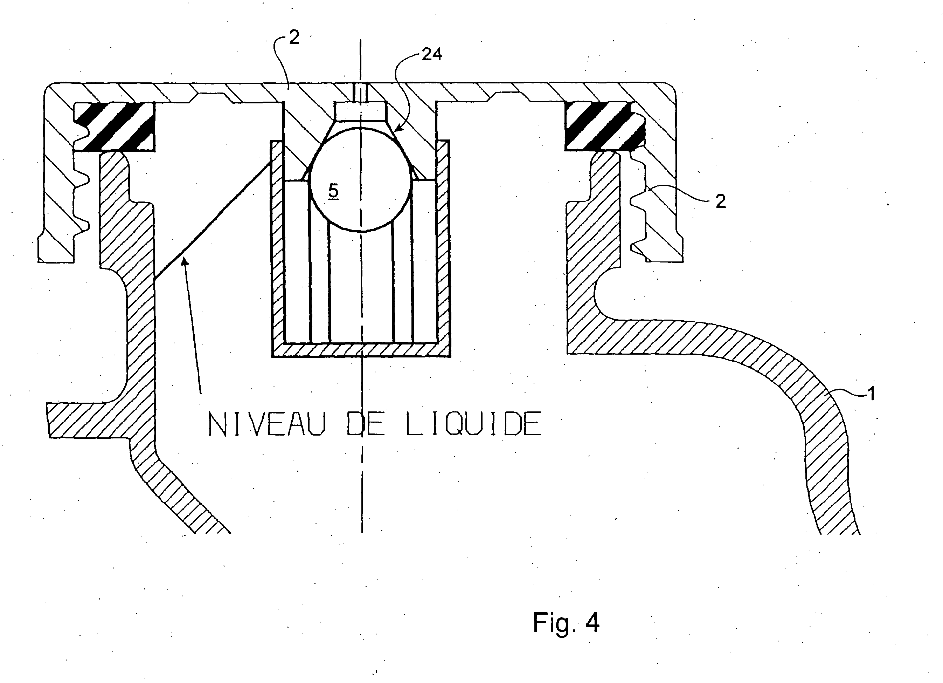

La figure 4 représente un cas où le liquide de freinage serait susceptible de sortir par le trou d'aération 22, mais le dispositif d'aération, qui est plaqué contre le trou d'aération, interdit au liquide de freinage de sortir.

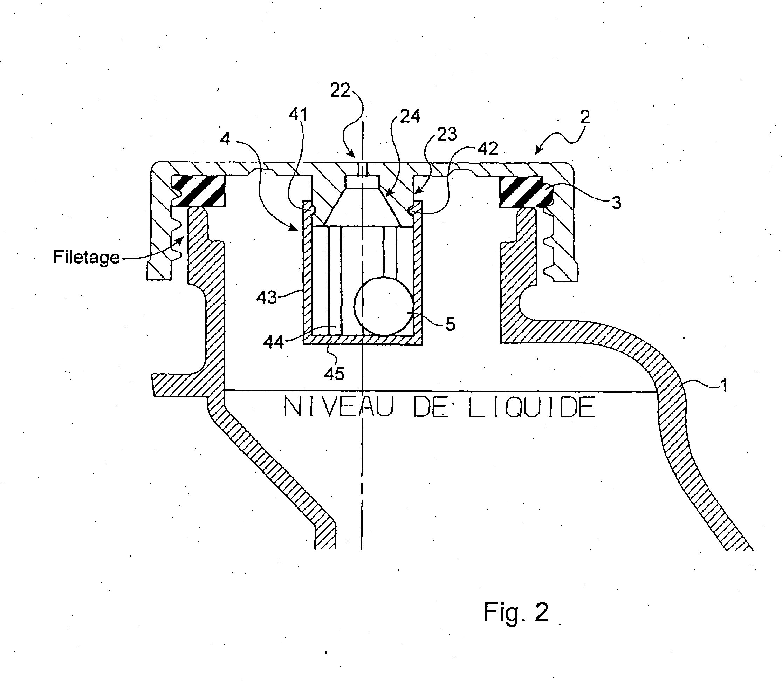

Selon une forme de réalisation de l'invention, le bouchon 2 comporte un bossage 23 situé à l'intérieur du bouchon et qui entoure le trou d'aération 22 de telle sorte que ce trou traverse également le bossage. La cage 4 peut alors être emboîtée sur ce bossage. Sa fixation au bossage peut se faire par vissage ou par encliquetage. Par exemple, la figure 2 illustre un montage par encliquetage d'éléments 41, 42 sur le bossage 23.

La cage 4 possède des parois latérales et selon la forme de réalisation de la figure 2, elle possède des ouvertures 44 qui peuvent être des fentes verticales, mais elles pourraient avoir toute autre forme. Le fond de la cage peut également avoir des ouvertures du moment que le dispositif d'obturation ne peut pas sortir dé la cage.

Pour que le dispositif vienne plus facilement obturer le trou 22 si le niveau de liquide monte, le bossage 23 peut être muni d'un fraisage conique 24 de telle façon que le dispositif d'obturation puisse venir se plaquer contre les parois de ce fraisage.

Le dispositif d'obturation 5 est par exemple une bille.

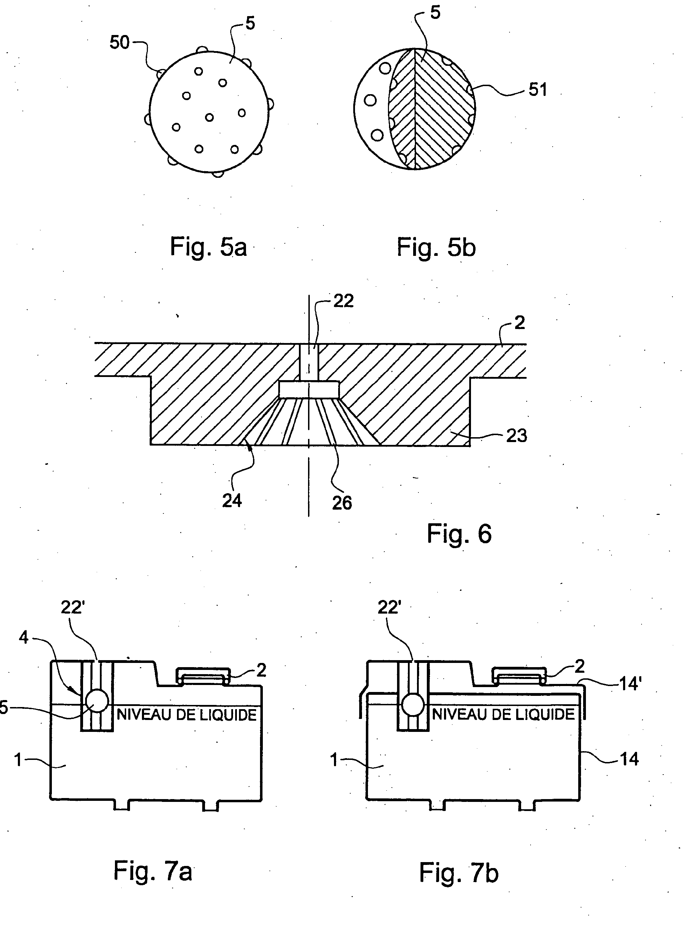

Selon une variante de réalisation telle que représentée en figures 5a et 5b, la bille 5 peut comporter des irrégularités de surface qui évitent un plaquage hermétique de la bille contre le trou 22 (ou le fraisage 24) ce qui permet une faible aération du réservoir même lorsque la bille 5 est plaquée contre le fraisage 24, mais ce qui interdit ou limite toute sortie éventuelle de liquide de freinage. Les irrégularités de surface peuvent prendre la forme de bosses 50 (figure 5a), ou de cuvettes 51 (figure 5b).

Selon une autre variante qui peut également être combinée avec la précédente variante, la paroi du fraisage conique 24 comporte des rainures 26 disposées selon des génératrices de la partie conique du fraisage. Comme précédemment, ces rainures éviteront une obturation hermétique du trou 22 par la bille 5.

Dans la description qui précède on a prévu le trou de mise à l'air libre de l'intérieur du réservoir sur le bouchon du réservoir. Le dispositif est donc, dans ce cas, associé au bouchon du réservoir.

La figure 7a représente une variante de réalisation de l'invention dans laquelle un trou d'aération 22' est prévu dans la partie supérieure du réservoir 1. Le dispositif décrit précédemment, comportant notamment la cage 4 et l'obturateur 5, au lieu d'être associé à un trou du bouchon 2 du réservoir, est donc associé à ce trou 22'.

La figure 7b représente une variante de réalisation de la figure 7a qui prévoit que le réservoir est réalisé en deux parties 14 et 14'. La partie inférieure 14 est destinée à contenir le liquide de frein. La partie supérieure 14' est destinée à s'emboîter ou se fixer de façon étanche sur la partie inférieure 14. Cette partie supérieure 14' comporte le trou d'aération 22' auquel est associé le dispositif d'obturation 4-5 selon l'invention. La conception en deux parties du réservoir 1 permet le montage aisé du dispositif d'obturation 4-5 sur la partie supérieure 14' du réservoir.

## Revendications

1. Dispositif de mise à l'air libre d'un réservoir de liquide de frein, comportant un trou (22, 22') de mise à l'air ambiant de l'intérieur (10) du réservoir, **caractérisé en ce qu'**il comporte un dispositif d'obturation (4) associé audit trou (22, 22') à l'intérieur du réservoir et contenant un obturateur (5) de forme sensiblement sphérique de densité inférieure à celle du liquide de freinage, et capable de se plaquer contre ledit trou (22, 22') sous la poussée du liquide de frein.

2. Dispositif selon la revendication 1, **caractérisé en ce que** ledit dispositif d'obturation (4) comporte une cage ajourée contenant ledit obturateur (5) et fixée autour dudit trou (22, 22').

3. Dispositif selon la revendication 1, **caractérisé en ce qu'**il comporte un bossage (23) situé à l'intérieur du réservoir autour du trou (22, 22') et **en ce que** la.cage (4) est fixée autour dudit bossage (23).

4. Dispositif selon la revendication 3, **caractérisé en ce que** la cage est emboîtée ou vissée sur ledit bossage (23).

5. Dispositif selon l'une des revendications 1 ou 4, **caractérisé en ce que** ledit trou (22, 22') est fraisé à l'intérieur du réservoir de façon à présenté une surface tronconique (24) sur laquelle l'obturateur est susceptible de se plaquer.

6. Dispositif selon la revendication 5, **caractérisé en ce que** la surface tronconique comporte des rainures (25) disposées selon des génératrices de la surface tronconique.

7. Dispositif selon l'une des revendication 1 ou 5, **caractérisé en ce que** l'obturateur (5) comporte des irrégularités en forme de creux et/ou de bosses.

8. Dispositif selon la revendication 3, **caractérisé en ce que** la cage a la forme générale d'un cylindre, la partie périphérique du cylindre comportant des ouvertures, une première base du cylindre comportant une ouverture destinée à être emboîtée sur ledit bossage, et une deuxième base du cylindre étant suffisamment fermée pour maintenir l'obturateur dans la cage.

9. Bouchon de réservoir de liquide de frein **caractérisé en ce que** le bouchon comporte un trou (22) de mise à l'air ambiant de l'intérieur du réservoir ainsi qu'un dispositif selon l'une quelconque des revendications précédentes associé audit trou (22).

10. Dispositif selon l'une des revendications 1 à 8, **caractérisé en ce que** le réservoir (1) comporte une partie inférieure (14) destinée à contenir le liquide de frein et une partie supérieure (14') qui se fixe de manière étanche sur la partie inférieure (14) et qui comporte un trou (22') auquel est associé ledit dispositif d'obturation (4).
